# FASCICULE DE BREVET EUROPEEN

(11) **EP 0 754 832 B1**
(45) Date de publication et mention de la délivrance du brevet: **14.06.2000**
(21) Numéro de dépôt: 96401454.2
(22) Date de dépôt: 02.07.1996
(51) Int. Cl.: E05F 1/12, A47J 36/12, E05F 3/16, E05F 3/20

(54) **Charnière pour couvercle de boîtier d'appareil de cuisson et son procédé de montage**
Scharnier für den Gehäusedeckel eines Kochgerätes
Hinge for cover of a cooking appliance box

(30) Priorité: 21.07.1995 FR 9508861
(43) Date de publication de la demande: 22.01.1997
(73) Titulaire: MOULINEX S.A., 75008 Paris (FR)
(72) Inventeur: Bois, Bernard Marcel, 14000 Caen (FR); Collas, Guy, 14123 Ifs (FR); Molveaux, Gérard, 14930 Vieux (FR)
(74) Mandataire: Busquets, Jean-Pierre

(56) Documents cités:
- EP-A- 0 406 750
- DE-U- 9 300 903

## Description

La présente invention se rapporte aux charnières de couvercles de boîtiers d'appareils de cuisson, tels que par exemple des friteuses, qui comportent un axe monté horizontalement dans un palier solidaire du boîtier et sur lequel vient pivoter le couvercle, ainsi qu'au moins un ressort à boudin monté concentriquement à l'axe et dont une extrémité dite libre est attachée au couvercle et dont l'autre extrémité dite fixe est liée à la paroi du boîtier de manière à ce que le ressort soit en tension lorsque le couvercle est maintenu par verrouillage en position de fermeture et pratiquement hors tension lorsque le couvercle occupe une position ouverte après déverrouillage.

Elle concerne, plus précisément, les charnières pour relevage automatique du couvercle qui sont équipées d'un dispositif de freinage du couvercle en fin de course de son ouverture, comprenant un support cylindrique agencé concentriquement au ressort et lié en rotation avec l'extrémité libre du ressort.

Des charnières de ce type sont connues du document EP-A-0 406 750.

On sait qu'avec de telles charnières, le dispositif de freinage du couvercle assure l'élimination de tout choc sur le couvercle en fin de course de son ouverture automatique, ceci dans le but d'empêcher tout débordement d'huile contenue dans la cuve de cuisson de l'appareil.

Dans des charnières connues de ce genre, comme décrit dans le document précité, l'élément support du dispositif de freinage du couvercle comporte deux pièces tubulaires concentriques disposées concentriquement au ressort, s'appuyant respectivement sur les deux spires d'extrémité du ressort et pourvues d'organes d'accouplement mutuel présentant des cames d'entraînement axial et de freinage aptes à comprimer le ressort de manière à obtenir un amortissement en fin de course de l'ouverture du couvercle. La réalisation de ce dispositif de freinage est relativement complexe et donc particulièrement coûteuse pour une fabrication en grande série d'appareils de cuisson. Par ailleurs, le montage d'une charnière équipée de ce type de dispositif de freinage est une opération compliquée qui contraint l'opératrice à exercer manuellement un effort articulaire pour mettre et maintenir l'extrémité fixe du ressort en tension avant le verrouillage de cette extrémité du ressort sur le boîtier de l'appareil, ce qui rend le processus de montage de la charnière particulièrement fatigant pour l'opératrice dont le poignet, au niveau de son articulation, peut même être sujet à des lésions inflammatoires, telles qu'une tendinite.

L'invention a pour but de réaliser une charnière équipée d'un dispositif de freinage du couvercle en fin d'ouverture automatique, qui soit simple, économique et parfaitement adaptée à une fabrication en grande série.

Dans une charnière selon l'invention, le ressort est assujetti par son extrémité fixe à une rampe de freinage formée transversalement dans la paroi latérale du support et dont le sens croissant est dirigé progressivement dans le sens de rotation d'ouverture du couvercle de manière que par suite de l'ouverture du couvercle, la rampe du support exerce sur le ressort une traction visant à le détendre dans la course finale du couvercle.

Ainsi, on comprend que lors de l'ouverture automatique du couvercle, le support entraîné en rotation par le couvercle agit sur les spires du ressort qui s'ouvrent par traction sous l'effet de la rampe du support, obtenant ainsi un amortissement du ressort en fin de course d'ouverture du couvercle. Ce type de freinage est donc simple et fait intervenir un minimum de pièces, d'où un gain important dans la fabrication en grande série.

Dans un mode d'exécution préféré, la rampe de freinage est réalisée sous la forme d'une rainure traversante creusée dans la paroi latérale du support et dont une extrémité dite haute forme une butée pour une partie de l'extrémité fixe du ressort lorsque le couvercle est en position de fermeture verrouillée, et dont l'autre extrémité dite basse est conformée en un berceau destiné à recevoir en appui une partie de l'extrémité fixe du ressort en fin de course de l'ouverture du couvercle.

L'invention vise également un procédé de montage d'une telle charnière, du type comportant deux ressorts réunis par leur extrémité fixe pour constituer un pied en fil en forme de U, qui est plus particulièrement destiné à simplifier l'opération manuelle d'assemblage du sous-ensemble couvercle-charnière avec le boîtier de l'appareil, et ce avec une grande facilité pour l'opératrice.

Les caractéristiques et avantages de l'invention ressortiront d'ailleurs de la description qui va suivre, à titre d'exemple non limitatif, en référence aux dessins annexés dans lesquels :
- la figure 1 est une vue schématique partielle en coupe verticale d'un boîtier d'un appareil de cuisson et de son couvercle équipé d'une charnière selon l'invention ;
- les figures 2 et 3 sont des vues partielles en coupe verticale de la charnière équipée d'un dispositif de freinage, illustrant le dispositif de freinage couvercle fermé (figure 2) et couvercle ouvert (figure 3) ;
- les figures 4 et 5 sont des vues schématiques en perspective du dispositif de freinage, montrant respectivement le dispositif de freinage pour le couvercle en position fermée de la figure 2 et pour le couvercle en position ouverte de la figure 3 ; et
- les figures 6, 7 et 8 représentent différentes étapes successives du procédé de montage de la charnière entre couvercle et boîtier de l'appareil de cuisson.

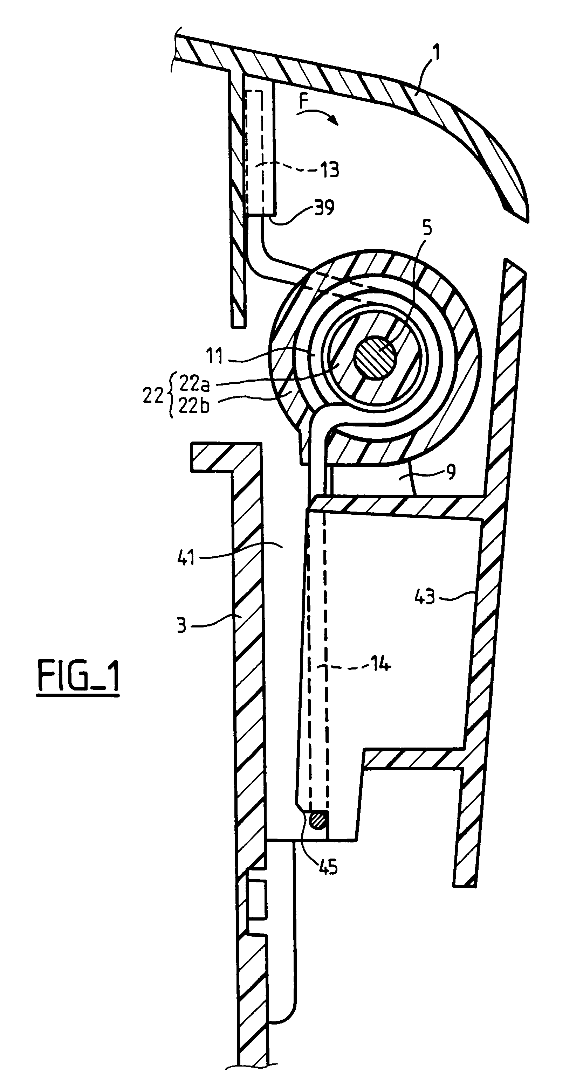

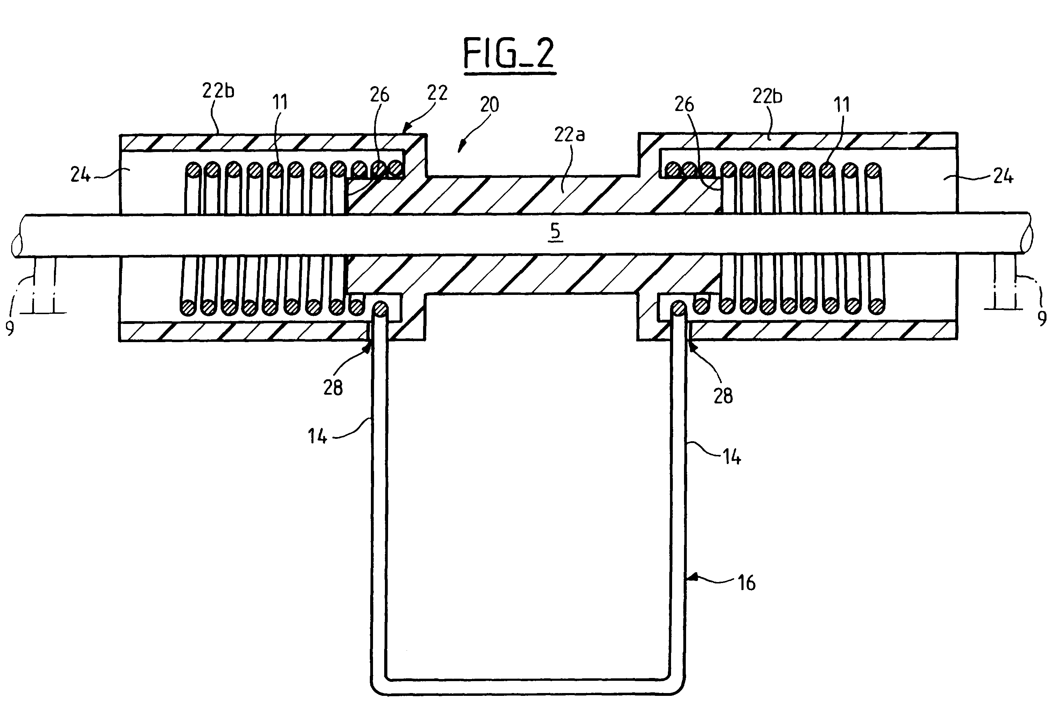

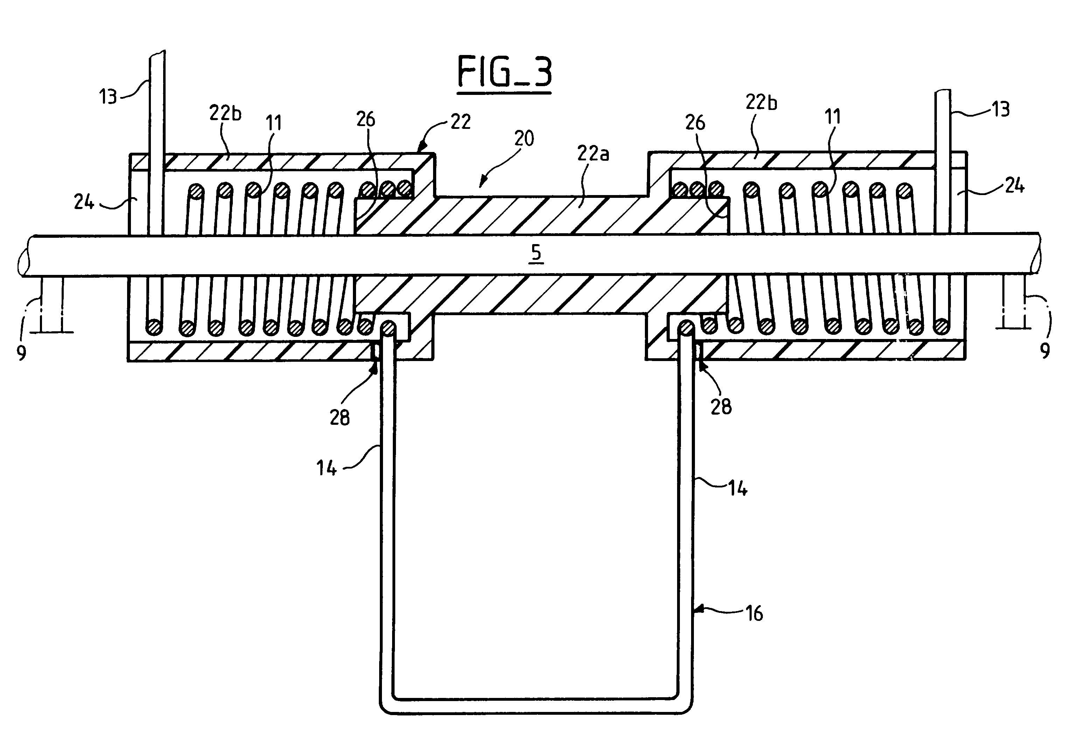

Suivant un exemple de réalisation préféré, la charnière représentée à la figure 1 est montée entre un couvercle 1 et un boîtier 3 d'un appareil de cuisson tel qu'une friteuse électrique, et comprend un axe 5 qui est monté horizontalement dans deux paliers 9 (schématisés en traits interrompus sur les figures 2 et 3) solidaires du boîtier, et sur lequel vient pivoter le couvercle, ainsi que deux ressorts identiques à boudin 11 montés distants l'un de l'autre et concentriquement à l'axe 5.

Les deux ressorts 11 présentent chacun une extrémité dite libre 13 attachée au couvercle 1 et une extrémité dite fixe 14 qui, présentement, relie les deux ressorts entre eux pour constituer un pied 16 en fil en forme de U (voir figures 2 et 3) lié à la paroi du boîtier 3 de manière à ce que chaque ressort 11 soit en tension - spires serrées - lorsque le couvercle est maintenu en position de fermeture (figures 1 et 2) au moyen d'un verrou (non représenté) solidaire du boîtier et agencé dans une région opposée à la charnière, et pratiquement hors tension - spires ouvertes - lorsque le couvercle occupe une position ouverte après libération du verrou (figure 3).

La charnière est équipée en outre d'un dispositif de freinage, désigné par la référence globale 20 aux figures 2 à 5, assurant le ralentissement du couvercle en fin de course de son ouverture automatique.

Dans cet exemple de réalisation, figures 2 à 5, le dispositif de freinage 20 comprend un support cylindrique 22 agencé concentriquement aux deux ressorts 11 et lié en rotation avec les deux extrémités libres 13 des deux ressorts 11, comme on le voit sur les figures 3, 4 et 5.

Ce support cylindrique 22 est réalisé de préférence d'une seule pièce en matière plastique et présente un tronçon central 22a coaxial à l'axe 5 (figures 2 et 3) et deux tronçons extrêmes identiques 22b présentant chacun sensiblement la forme d'un fût, noté 24, ouvert vers l'extérieur et logeant concentriquement le ressort correspondant 11 dont l'extrémité liée au pied 16 est montée autour d'un moyeu coaxial 26 formé sur la paroi de fond du fût 24.

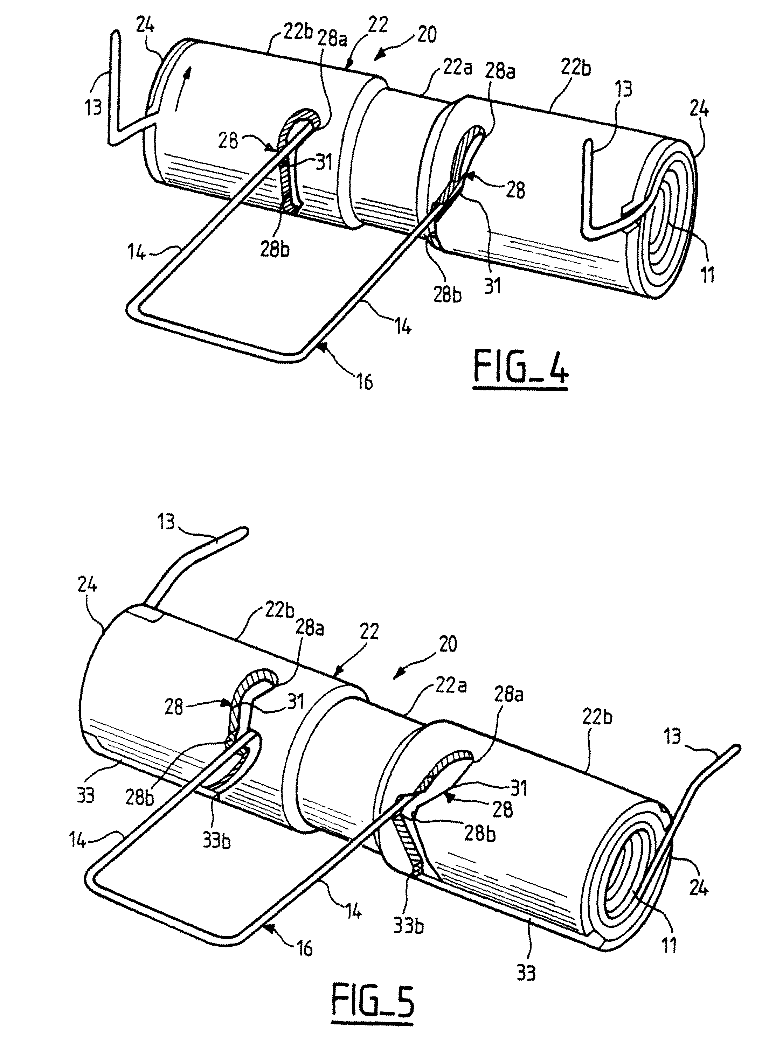

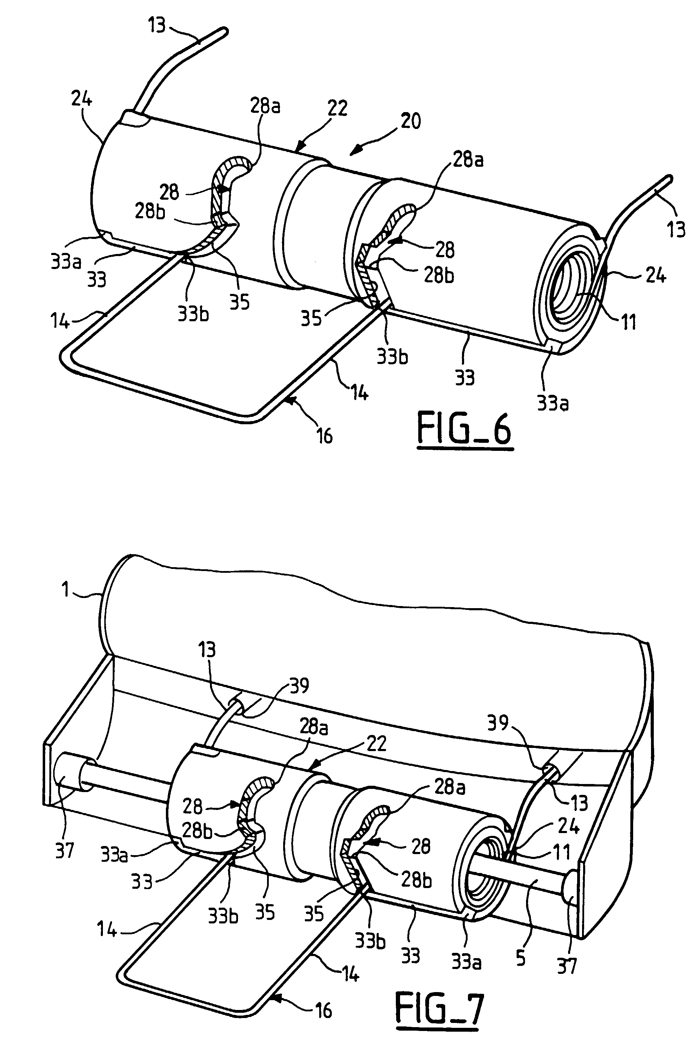

Selon l'invention, comme le montrent bien les figures 4 et 5, chaque ressort 11 est assujetti par son extrémité fixe 14 à une rampe de freinage 28 formée transversalement dans la paroi latérale du support 22, présentement dans la paroi latérale du fût correspondant 24, et dont le sens croissant est dirigé progressivement dans le sens de rotation d'ouverture du couvercle, selon la flèche F de la figure 1, de manière que par suite de l'ouverture du couvercle, chaque rampe de freinage 28 exerce sur le ressort associé 11 une traction visant à le détendre dans la course finale du couvercle.

Dans un mode d'exécution préféré, illustré aux figures 4 et 5, les deux rampes de freinage 28, identiques et orientées en sens opposé, sont réalisées chacune sous la forme d'une rainure traversante creusée dans la paroi latérale du fût correspondant 24, suivant une pente progressive appropriée avec par exemple un palier intermédiaire noté 31, dont une extrémité dite haute 28a forme une butée pour une partie de l'extrémité fixe 14 du ressort associé 11 lorsque le couvercle est en position de fermeture verrouillée, voir figure 4, et dont l'autre extrémité dite basse 28b est conformée en un berceau destiné à recevoir en appui une partie de l'extrémité fixe 14 du ressort associé 11 en fin de course de l'ouverture du couvercle, voir figure 5.

Il convient de souligner ici que la réalisation en une seule pièce du support 22 dans laquelle sont découpées les deux rainures de freinage 28, de profil adapté, est particulièrement simple et parfaitement adaptée à une fabrication en grande série.

On va maintenant expliciter le montage de la charnière selon l'invention décrite ci-dessus, en se reportant aux figures 6, 7 et 8.

Tout d'abord, figure 6, l'opératrice fait glisser chaque extrémité 14 du pied 16 de liaison des deux ressorts 11 dans une rainure longitudinale 33 pratiquée dans le fût correspondant 24, depuis l'une 33a des extrémités de cette rainure 33, dite d'introduction de l'extrémité 14 du pied 16 et débouchant du fût 24, jusqu'à l'autre extrémité 33b de la rainure 33, dite d'appui de l'extrémité 14 du pied 16. Lors de ce glissement des deux extrémités 14 du pied 16, les deux ressorts 11 s'engagent respectivement dans les deux fûts 24 du support 22 et l'extrémité libre 13 de chaque ressort 11 passe dans une échancrure longitudinale (non représentée) pratiquée dans le fût associé 24.

Ainsi, lors de cette mise en appui par glissement de chaque extrémité 14 du pied 16 contre l'extrémité 33b de la rainure 33, comme illustré à la figure 6, chaque ressort 11 est avantageusement à l'état détendu.

Comme le montrent les figures 6 et 7, l'extrémité d'appui 33b de chaque rainure 33 communique avec le berceau 28b de la rainure de freinage 28 par l'intermédiaire d'une autre rainure, notée 35, ayant un profil adapté et formant en soi une rampe d'accès.

A partir de cette position d'appui des deux extrémités 14 du pied 16 de la figure 6, l'opératrice engage l'axe 5, comme le montre la figure 7, au travers du support 22 puis monte les extrémités de l'axe 5 sur deux pivots 37 du couvercle 1 et fixe les extrémités libres 13 des deux ressorts 11 dans des petits logements 39 du couvercle, réalisant ainsi un sous-ensemble couvercle-charnière tel qu'illustré à la figure 7.

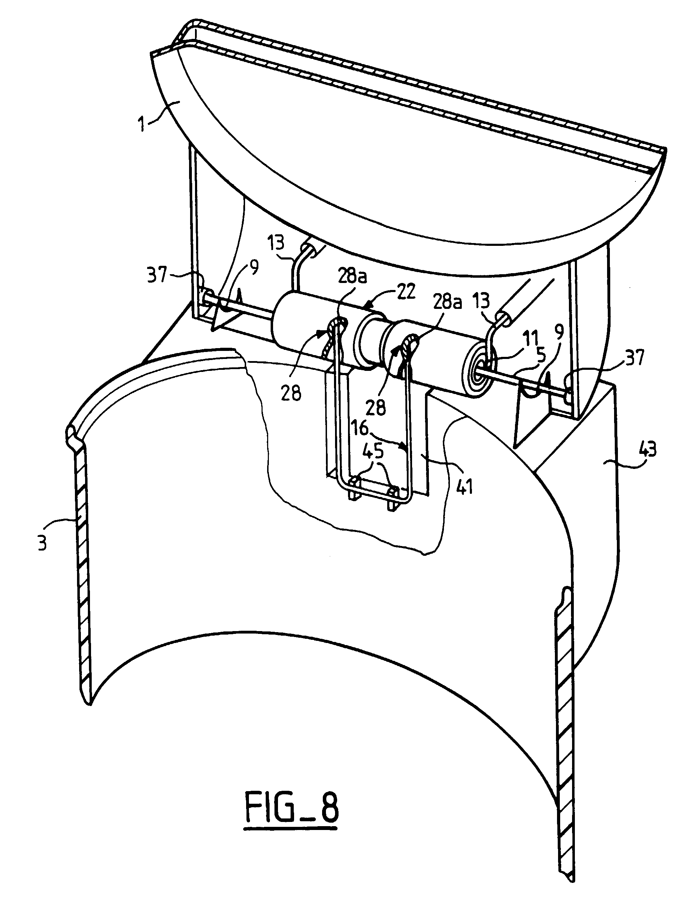

Comme le montre la figure 8, l'opératrice introduit ensuite verticalement le pied 16 de ce sous-ensemble dans un logement 41, mieux visible à la figure 1, qui est pratiqué entre la face externe du boîtier 3 et une embase latérale 43, et qui est adapté à déformer élastiquement ledit pied 16 vers l'intérieur de façon que celui-ci vienne s'appliquer dans le berceau 28b de chaque rainure de freinage 28 via la rainure d'accès 35, après franchissement de l'arête du berceau formant en soi un point dur, de manière à provoquer la compression de chaque ressort 11, occupant ainsi la position illustrée à la figure 5, jusqu'à obtenir l'encliquetage du pied 16 sur deux crans 45 portés par la face interne de l'embase 43, comme montré à la figure 8. Lors de cet encliquetage du pied 16, figure 8, l'axe 5 vient s'engager dans les deux paliers 9 solidaires de l'embase porte-charnière 43 et ouverts vers le haut afin d'y maintenir l'axe en traction.

Ainsi, grâce à la position intermédiaire d'appui des deux extrémités 14 du pied 16 du sous-ensemble couvercle-charnière tel qu'illustré à la figure 7, la mise en tension du pied 16 des deux ressorts 11 avant verrouillage de celui-ci sur le boîtier 3 est désormais réalisée automatiquement sous l'effet du couvercle 1 lors de l'introduction du pied de ce sous-ensemble dans le logement 41, facilitant ainsi grandement le travail de l'opératrice.

Le fonctionnement de la charnière une fois montée est alors le suivant.

Le couvercle 1 étant dans sa position illustrée à la figure 1 et dans laquelle les deux ressorts 11 sont à l'état comprimé (figure 2) avec leur extrémité 14 appliquée contre la butée formée par l'extrémité haute 28a de la rampe de freinage 28 (figure 4), un déverrouillage du couvercle provoque un violent rappel de l'extrémité 13 de chaque ressort vers l'arrière (flèche F) et une rotation du support 22 dans le sens d'ouverture du couvercle. Lors de cette rotation du support 22, chaque rampe 28 exerce progressivement une traction sur le ressort associé 11, au niveau de son extrémité liée au pied 16, dont les spires s'ouvrent, provoquant ainsi dans la course finale du couvercle un amortissement pratiquement total de chaque ressort 11 (figure 3) dont l'extrémité fixe 14 vient s'appliquer dans le berceau 28b de la rampe 28 (figure 5) jusqu'à l'amener en son état hors tension, évitant ainsi le pivotement excessif du couvercle vers l'arrière qui aurait entraîner le renversement de la cuve de cuisson ou des projections d'huile.

On a donc réalisé suivant l'invention une charnière équipée d'un dispositif de freinage du couvercle en fin d'ouverture automatique, qui est particulièrement avantageuse tant du point de vue de sa simplicité et de son faible coût de réalisation que du point de vue de sa facilité de montage.

## Revendications

1. Charnière de couvercle de boîtier d'appareil de cuisson, tel que par exemple une friteuse, comportant un axe (5) monté horizontalement dans un palier (9) solidaire du boîtier (3) et sur lequel vient pivoter le couvercle (1), ainsi qu'au moins un ressort à boudin (11) monté concentriquement à l'axe (5) et dont une extrémité dite libre (13) est attachée au couvercle (1) et dont l'autre extrémité dite fixe (14) est liée à la paroi du boîtier de manière à ce que le ressort (11) soit en tension lorsque le couvercle est maintenu par verrouillage en position de fermeture et pratiquement hors tension lorsque le couvercle occupe une position ouverte après déverrouillage ; ladite charnière étant équipée d'un dispositif (20) de freinage du couvercle (1) en fin de course de son ouverture, comprenant un support cylindrique (22) agencé concentriquement au ressort (11) et lié en rotation avec l'extrémité libre (13) du ressort (11),
**caractérisée en ce que** le ressort (11) est assujetti par son extrémité fixe (14) à une rampe de freinage (28) formée transversalement dans la paroi latérale du support (22) et dont le sens croissant est dirigé progressivement dans le sens de rotation d'ouverture du couvercle de manière que par suite de l'ouverture du couvercle, la rampe (28) du support exerce sur le ressort (11) une traction visant à le détendre dans la course finale du couvercle.

2. Charnière selon la revendication 1,
**caractérisée en ce que** la rampe de freinage (28) est réalisée sous la forme d'une rainure traversante creusée dans la paroi latérale du support (22) et dont une extrémité dite haute (28a) forme une butée pour une partie de l'extrémité fixe (14) du ressort (11) lorsque le couvercle est en position de fermeture verrouillée, et dont l'autre extrémité dite basse (28b) est conformée en un berceau destiné à recevoir en appui une partie de l'extrémité fixe (14) du ressort (11) en fin de course de l'ouverture du couvercle.

3. Charnière selon la revendication 1 ou 2, comportant deux ressorts (11) distants l'un de l'autre et réunis par leur extrémité fixe (14) pour constituer un pied (16) en fil en forme de U,
**caractérisée en ce que** les deux ressorts (11) sont agencés dans le même support cylindrique (22) en étant assujettis respectivement, par les extrémités du pied en forme de U, à deux rampes de freinage (28) identiques orientées en sens opposé, et ledit support (22) est réalisé d'une seule pièce et présente un tronçon central (22a) coaxial à l'axe (5) et deux tronçons extrêmes (22b) présentant chacun sensiblement la forme d'un fût (24) ouvert vers l'extérieur, logeant l'un des ressorts (11) et pourvu de la rampe de freinage (28) associée audit ressort (11).

4. Procédé de montage d'une charnière selon les revendications 2 et 3,
**caractérisé en ce que** l'on fait glisser chaque extrémité (14) du pied (16) de liaison des deux ressorts (11) dans une rainure longitudinale (33) pratiquée dans le fût correspondant (24) du support (22), depuis l'une (33a) de ses extrémités dite d'introduction qui débouche dudit fût jusqu'à son autre extrémité dite d'appui (33b) communiquant avec le berceau (28b) de la rainure formant la rampe de freinage (28) par l'intermédiaire d'une autre rainure (35) formant une rampe d'accès, chaque ressort (11) s'engageant dans le fût correspondant (24) lors de ce glissement du pied et étant à l'état détendu lorsque le pied est appliqué contre ladite extrémité d'appui (33b) de la rainure (33), l'extrémité libre de chaque ressort passant lors du glissement du' pied dans une échancrure longitudinale pratiquée dans le fût correspondant ; on engage l'axe (5) au travers du support (22) ainsi équipé, puis on monte les extrémités de l'axe (5) sur deux pivots (37) du couvercle (1) et on fixe les deux extrémités libres des ressorts (11) dans deux petits logements (39) du couvercle (1) ; on introduit verticalement le pied (16) du sous-ensemble ainsi réalisé dans un logement (41) qui est pratiqué entre la face externe du boîtier (3) et une embase latérale (43), et qui est adapté à déformer élastiquement ledit pied (16) de façon que celui-ci vienne s'appliquer dans ledit berceau (28b) via la rainure (35) formant la rampe d'accès et après franchissement d'un point dur formé par l'arête du berceau (28b), ledit pied (16) venant ensuite se fixer par encliquetage sur au moins un cran (45) porté par la face interne de l'embase (43) et l'axe (5) venant en même temps s'engager dans son palier (9) solidaire du boîtier.

## Patentansprüche

1. Scharnier für den Gehäusedeckel eines Kochgerätes wie einer Friteuse, mit einer Achse (5), die horizontal in einem Lager (9) montiert ist, das mit dem Gehäuse (3) fest verbunden ist, und auf der der Deckel (1) schwenkt, sowie mit mindestens einer Schraubenfeder (11), die konzentrisch zur Achse (5) montiert ist und von der ein sogenanntes freies Ende (13) am Deckel (1) angebracht ist und von der das andere sogenannte fixe Ende (14) mit der Wand des Gehäuses so verbunden ist, daß die Feder (11) gespannt ist, wenn der Deckel durch Verriegelung in der Schließstellung gehalten ist, und praktisch spannungsfrei ist, wenn der Deckel nach dem Entriegeln eine Öffnungsstellung einnimmt, wobei das Scharnier mit einer Vorrichtung (20) zum Bremsen des Deckels (1) am Ende seiner Öffnungsbewegung ausgerüstet ist, die einen zylindrischen Träger (22) aufweist, der konzentrisch zur Feder (11) angeordnet und mit dem freien Ende (13) der Feder (11) zur Drehung verbunden ist, **dadurch gekennzeichnet, daß** die Feder (11) durch ihr fixes Ende (14) von einer Bremsrampe (28) beaufschlagt ist, die quer in der Seitenwand des Trägers (22) ausgebildet ist und deren steigender Sinn progressiv im Sinn der Drehrichtung des Öffnens des Deckels gerichtet ist, so daß infolge des Öffnens des Deckels die Rampe (28) des Trägers auf die Feder (11) einen Zug ausübt, um sie in der Endbewegung des Deckels zu entspannen.

2. Scharnier nach Anspruch 1, **dadurch gekennzeichnet, daß** die Bremsrampe (28) in Form einer quer verlaufenden, die Seitenwand des Trägers (22) durchbrechenden Nut ausgebildet ist und ein sogenanntes oberes Ende (28a) derselben einen Anschlag für einen Teil des fixen Endes (14) der Feder (11) bildet, wenn der Deckel sich in der verriegelten Schließstellung befindet, und deren anderes, sogenanntes unteres Ende (28b) die Form eines Nutbogens zur Aufnahme eines dort andrückenden Teils des festen Endes (14) der Feder (11) am Ende der Öffnungsbewegung des Deckels hat.

3. Scharnier nach Anspruch 1 oder 2 mit zwei voneinander entfernten Federn (11), die durch ihr festes Ende (14) verbunden sind, das einen U-förmigen Bügel (16) aus Draht bildet, **dadurch gekennzeichnet, daß** die zwei Federn (11) im gleichen zylindrischen Träger (22) angeordnet und jeweils durch die Enden des U-förmigen Bügels von zwei identischen und in entgegengesetzter Richtung ausgerichteten Bremsrampen (28) beaufschlagt sind und der Träger (22) einstückig ausgebildet ist und einen zur Achse (5) koaxialen Mittelabschnitt (22a) und zwei Außenabschnitte (22b) aufweist, die jeder im wesentlichen die Form einer nach außen offenen Hülse (24) haben, welche eine der Federn (11) aufnimmt und mit der zur Feder (11) gehörenden Bremsrampe (28) versehen ist.

4. Verfahren zur Montage eines Scharniers nach den Ansprüchen 2 und 3, **dadurch gekennzeichnet, daß** man jedes Ende (14) des Verbindungsbügels (16) der zwei Federn (11) in einer in der entsprechenden Hülse (24) des Trägers (22) ausgebildeten Längsnut (33) von einem sogenannten Einführungsende (33a), das von der Hülse nach außen mündet, bis zu deren anderen, sogenannten Anlageende (33b) gleiten läßt, das mit dem Nutbogen (28b) der die Bremsrampe (28) bildenden Nut über eine andere, eine Zugangsrampe bildende Nut (35) in Verbindung steht, wobei jede Feder (11) bei diesem Gleiten des Bügels in die entsprechende Hülse (24) eingesetzt wird und sich in entspanntem Zustand befindet, wenn der Bügel gegen das Anlageende (33b) der Nut (33) anliegt, wobei das freie Ende jeder Feder beim Gleiten des Bügels in einen in der entsprechenden Hülse ausgebildeten bogenförmigen Längsausschnitt gelangt; die Achse (5) durch den so ausgerüsteten Träger (22) geschoben wird und dann die Enden der Achse (5) auf zwei Lagern (37) des Deckels (1) montiert und die zwei freien Enden der Federn (11) in zwei kleinen Lagern (39) des Deckels (1) fixiert werden, der Bügel (16) der so hergestellten Untereinheit vertikal in einen Sitz (41) eingeführt wird, der zwischen der Außenseite des Gehäuses (3) und einer seitlichen Sitzfläche (43) ausgebildet ist und der geeignet ist, den Bügel (16) so elastisch zu verformen, daß dieser sich durch die Nut (35), welche die Zugangsrampe bildet, und nach Überwinden eines von der Kante des Nutbogens (28b) gebildeten Druckpunktes in den Nutbogen (28b) legt, wobei der Bügel (16) anschließend durch Einrasten auf mindestens einer Rastkerbe (45), die von der Innenseite der Sitzfläche (43) getragen ist, fixiert wird und die Achse (5) gleichzeitig in ihr mit dem Gehäuse fest verbundenes Lager (9) eingreift.

## Claims

1. Hinge for a lid on the casing of a cooking appliance, such as for example a deep fryer, comprising a spindle (5) mounted horizontally in a bearing (9) fixed to the casing (3) and on which the lid (1) pivots, as well as at least one coil spring (11) mounted concentrically with the spindle (5) and a so-called free end (13) of which is attached to the lid (1) and the other so-called fixed end (14) of which is connected to the wall of the casing so that the spring (11) is tensioned when the lid is held by locking in the closed position and practically untensioned when the lid occupies an open position after unlocking; said hinge being equipped with a device (20) for braking the lid (1) at the end of travel of its opening, comprising a cylindrical support (22) arranged concentrically with the spring (11) and connected so as to rotate with the free end (13) of the spring (11),
**characterized in that** the spring (11) is connected by its fixed end (14) to a braking ramp (28) formed transversely in the lateral wall of the support (22) and whose increasing direction is directed progressively in the direction of opening rotation of the lid so that, following the opening of the lid, the ramp (28) of the support exerts on the spring (11) a traction tending to relax in the final travel of the lid.

2. Hinge according to claim 1,
**characterized in that** the braking ramp (28) is produced in the form of a through groove hollowed out in the lateral wall of the support (22) and a so-called top end (28a) of which forms a stop for a part of the fixed end (14) of the spring (11) when the lid is in the locked closed position and the other so-called bottom end (28b) of which is shaped like a cradle intended to receive in abutment a part of the fixed end (14) of the spring (11) at the end of opening travel of the lid.

3. Hinge according to claim 1 or 2, comprising two springs (11) distant from each other and connected by their fixed end (14) in order to form a U-shaped wire foot (16),
**characterized in that** the two springs (11) are arranged in the same cylindrical support (22) whilst being connected respectively, by the ends of the U-shaped foot, to two identical braking ramps (28) oriented in opposite directions, and said support (22) is produced in a single piece and has a central portion (22a) coaxial with the spindle (5) and two end portions (22b) each having substantially the shape of a barrel (24) open towards the outside, housing one of the springs (11) and provided with the braking ramp (28) associated with the spring (11).

4. Method of mounting a hinge according to claims 2 and 3, **characterized in that** each end (14) of the connecting foot (16) of the two springs (11) is slid in a longitudinal groove (33) formed in the corresponding barrel (24) of the support (22), from one (33a) of its ends, referred to as the insertion end, which opens out from the barrel, to its other end, referred to as the abutment end (33b), communicating with the cradle (28b) of the groove forming the braking ramp (28) by means of another groove (35) forming an access ramp, each spring (11) engaging in the corresponding barrel (24) during this sliding of the foot and being in the relaxed state when the foot is applied against the abutment end (33b) of the groove (33), the free end of each spring passing, when the foot slides, in a longitudinal scallop formed in the corresponding barrel ; the spindle (5) is engaged through the support (22) thus equipped, and then the ends of the spindle (5) are mounted on two pivots (37) for the lid (1) and the two free ends of the springs (11) are fixed in two small housings (39) in the lid (1), the foot (16) of the subassembly thus produced is inserted vertically in a housing (41) which is formed between the external face of the casing (3) and a lateral base (43) and which is adapted to elastically deform the foot (16) so that the latter comes to be applied in said cradle (28b) via the groove (35) forming the access ramp and after passing a tight spot formed by the ridge on the cradle (28b), said foot (16) then coming to be fixed by snapping onto at least one catch (45) carried by the internal face of the base (43) and the spindle (5) coming at the same time to be engaged in its bearing (9) fixed to the casing.
